# EUROPEAN PATENT APPLICATION

(11) **EP 3 846 083 A1**
(43) Date of publication of application: **07.07.2021**
(21) Application number: 20178048.3
(22) Date of filing: 03.06.2020
(51) Int. Cl.: G06N 3/02, G06N 3/08, G06N 3/10

(54) **METHOD AND APPARATUS FOR PARALLEL PROCESSING OF INFORMATION**

(30) Priority: 31.12.2019 CN 201911405961
(71) Applicant: BEIJING BAIDU NETCOM SCIENCE AND TECHNOLOGY CO. LTD., 100085 Beijing (CN)
(72) Inventor: HUANG, Zhengjie, Haidian District, Beijing 100085 (CN); CHEN, Chaoxing, Haidian District, Beijing 100085 (CN); FENG, Shikun, Haidian District, Beijing 100085 (CN); LU, Hua, Haidian District, Beijing 100085 (CN)
(74) Representative: V.O.

(57) **Abstract**

Embodiments of the present disclosure disclose a method and apparatus for parallel processing of information. A specific embodiment of the method includes: detecting whether a source node in a graph structure processed by a graph neural network sends information to a target node; generating and recording, in response to detecting that the source node sends the information to the target node, a target information sequence and an index for the target information sequence, target information being determined based on a characteristic of the source node, a characteristic of the target node, and the sent information, and the index being used to group the target information sequence; using the index to group the target information sequence; and processing groups of target information in parallel. This embodiment may process the information in the graph neural network in parallel, which improves the training speed and prediction speed of the graph neural network.

## Description

### TECHNICAL FIELD

Embodiments of the present disclosure relate to the field of computer technologies, and specifically to a method and apparatus for parallel processing of information.

### BACKGROUND

Graph neural network (GNN) is a neural network that processes graph structures. At present, GNN has been more and more widely used in various fields such as social networks, knowledge graphs, recommendation systems and even life sciences. Since GNN has powerful functions in modeling the dependence relationship between graph nodes, GNN has made a breakthrough in the research field related to graph analysis.

### SUMMARY

Embodiments of the present disclosure propose a method and apparatus for parallel processing of information.

In a first aspect, an embodiment of the present disclosure provides a method for parallel processing of information, including: detecting whether a source node in a graph structure processed by a graph neural network sends information to a target node; generating and recording, in response to detecting that the source node sends the information to the target node, a target information sequence and an index for the target information sequence, target information being determined based on a characteristic of the source node, a characteristic of the target node, and the sent information, and the index being used to group the target information sequence; using the index to group the target information sequence; and processing groups of target information in parallel.

In some embodiments, the generating and recording, in response to detecting that the source node sends the information to the target node, the target information sequence and the index for the target information sequence, includes: sorting, in response to detecting that the source node sends the information to the target node, pieces of information in an order of node numbers of target nodes receiving the information in ascending order, wherein the node number is represented in a form of numerical value; inputting, for each piece of information in the pieces of information, the piece of information, a characteristic of a source node from which the piece of information originates, and a characteristic of a target node to which the piece of information is sent, to a preset sending function to obtain target information corresponding to the piece of information; and sorting pieces of target information to generate and record the target information sequence, according to a sorting result of the pieces of information.

In some embodiments, the generating and recording, in response to detecting that the source node sends the information to the target node, the target information sequence and the index for the target information sequence, includes: generating, based on lengths of information received by target nodes, indexes for the target information sequence, and recording the indexes.

In some embodiments, after the processing groups of target information in parallel, the method further includes: associating and storing, for each group of target information in the groups of the target information, a processing result after parallel processing of the group of target information and a node identifier of a target node corresponding to the group of target information.

In some embodiments, after the inputting, for each piece of information in the pieces of information, the piece of information, the characteristic of the source node from which the piece of information originates, and the characteristic of the target node to which the piece of information is sent, to the preset sending function to obtain target information corresponding to the piece of information, the method further includes: associating and storing the target information with a node identifier of a corresponding target node.

In a second aspect, an embodiment of the present disclosure provides an apparatus for parallel processing of information, including: a detection unit, configured to detect whether a source node in a graph structure processed by a graph neural network sends information to a target node; a recording unit, configured to generate and record, in response to detecting that the source node sends the information to the target node, a target information sequence and an index for the target information sequence, target information being determined based on a characteristic of the source node, a characteristic of the target node, and the sent information, and the index being used to group the target information sequence; a grouping unit, configured to use the index to group the target information sequence; and a processing unit, configured to process groups of target information in parallel.

In some embodiments, the recording unit is further configured to generate and record, in response to detecting that the source node sends the information to the target node, the target information sequence and the index for the target information sequence by: sorting, in response to detecting that the source node sends the information to the target node, pieces of information in an order of node numbers of target nodes receiving the information in ascending order, wherein the node number is represented in a form of numerical value; inputting, for each piece of information in the pieces of information, the piece of information, a characteristic of a source node from which the piece of information originates, and a characteristic of a target node to which the piece of information is sent, to a preset sending function to obtain target information corresponding to the piece of information; and sorting pieces of target information to generate and record the target information sequence, according to a sorting result of the pieces of information.

In some embodiments, the recording unit is further configured to generate and record, in response to detecting that the source node sends the information to the target node, the target information sequence and the index for the target information sequence by: generating, based on lengths of information received by target nodes, indexes for the target information sequence, and recording the indexes.

In some embodiments, the apparatus further includes: a first storing unit, configured to associate and store, for each group of target information in the groups of the target information, a processing result after parallel processing of the group of target information and a node identifier of a target node corresponding to the group of target information.

In some embodiments, the apparatus further includes: a second storing unit, configured to associate and store the target information with a node identifier of a corresponding target node.

In a third aspect, an embodiment of the present disclosure provides an electronic device, the device electronic including: one or more processors; and a storage apparatus, storing one or more programs thereon, where the one or more programs, when executed by the one or more processors, cause the one or more processors to implement any embodiment of the method according to the first aspect.

In a fourth aspect, an embodiment of the present disclosure provides a computer readable medium, storing a computer program thereon, where the computer program, when executed by a processor, implements any embodiment of the method according to the first aspect.

The method and apparatus for parallel processing of information provided by embodiments of the present disclose, first detect whether a source node in a graph structure processed by a graph neural network sends information to a target node; in response to detecting that the source node sends the information to the target node, generate and record a target information sequence and an index for the target information sequence; then use the index to group the target information sequence; and finally process groups of target information in parallel. In this way, the information in the graph neural network may be processed in parallel, which improves the training speed and prediction speed of the graph neural network.

### BRIEF DESCRIPTION OF THE DRAWINGS

By reading the detailed description of non-limiting embodiments with reference to the following accompanying drawings, other features, objectives and advantages of the present disclosure will become more apparent.
Fig. 1 is a diagram of an example system architecture in which embodiments of the present disclosure may be implemented;
Fig. 2 is a flowchart of a method for parallel processing of information according to an embodiment of the present disclosure;
Fig. 3 is a schematic diagram of an application scenario of the method for parallel processing of information according to the present disclosure;
Fig. 4 is a flowchart of the method for parallel processing of information according to another embodiment of the present disclosure;
Fig. 5 is a schematic structural diagram of an apparatus for parallel processing of information according to an embodiment of the present disclosure; and
Fig. 6 is a schematic structural diagram of a computer system adapted to implement an electronic device according to an embodiment of the present disclosure.

### DETAILED DESCRIPTION OF EMBODIMENTS

Embodiments of present disclosure will be described below in detail with reference to the accompanying drawings. It should be appreciated that the specific embodiments described herein are merely used for explaining the relevant disclosure, rather than limiting the disclosure. In addition, it should be noted that, for the ease of description, only the parts related to the relevant disclosure are shown in the accompanying drawings.

It should also be noted that some embodiments in the present disclosure and some features in the disclosure may be combined with each other on a non-conflict basis. Features of the present disclosure will be described below in detail with reference to the accompanying drawings and in combination with embodiments.

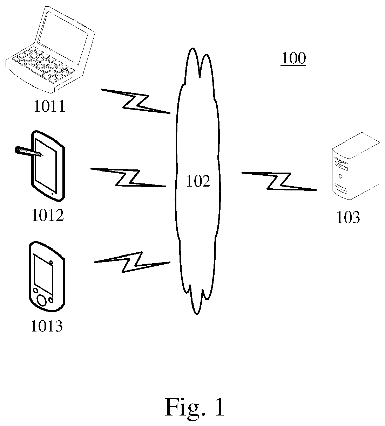

Fig. 1 illustrates an example system architecture 100 in which an embodiment of a method for parallel processing of information of the present disclosure may be implemented.

As shown in Fig. 1, the system architecture 100 may include terminal devices 1011, 1012, 1013, a network 102, and a server 103. The network 102 serves as a medium providing a communication link between the terminal devices 1011, 1012, 1013 and the server 103. The network 102 may include various types of connections, such as wired or wireless communication links, or optic fibers.

A user may interact with the server 103 through the network 102 using the terminal devices 1011, 1012, 1013, to receive or send messages or the like. Various communication client applications, such as shopping applications, search applications, instant communication software, may be installed on the terminal devices 1011, 1012, and 1013.

The terminal devices 1011, 1012, and 1013 may be hardware or software. When the terminal devices 1011, 1012, and 1013 are hardware, the terminal devices 1011, 1012, and 1013 may be various electronic devices supporting information interaction, including but not limited to smart phones, tablet computers, laptop portable computers, desktop computers, or the like. When the terminal devices 1011, 1012, and 1013 are software, the terminal devices 1011, 1012, and 1013 may be installed in the electronic devices listed above. The terminal devices 1011, 1012, and 1013 may be implemented as a plurality of software or software modules, or as a single software or software module, which is not specifically limited herein.

The server 103 may be a server that provides various services. For example, a backend server for parallel processing of information. The server 103 may first detect whether a source node in a graph structure processed by a graph neural network sends information to a target node; then, if it is detected that the source node sends the information to the target node, generate and record a target information sequence and an index for the target information sequence; then use the index to group the target information sequence; and finally process groups of target information in parallel.

It should be noted that the server 103 may be hardware or software. When the server 103 is hardware, the server 103 may be implemented as a distributed server cluster composed of a plurality of servers, or may be implemented as a single server. When the server 103 is software, the server 103 may be implemented as a plurality of software or software modules (for example, for providing distributed services), or as a single software or software module, which is not specifically limited herein.

It should be noted that the method for parallel processing of information provided by embodiments of the present disclosure is generally performed by the server 103.

It should be noted that the server 103 may also store a graph structure locally. In this regard, the example system architecture 100 may not include the terminal devices 1011, 1012, 1013, and the network 102.

It should be understood that the numbers of terminal devices, networks, and servers in Fig. 1 are merely illustrative. Depending on the implementation needs, any number of terminal devices, networks, and servers may be provided.

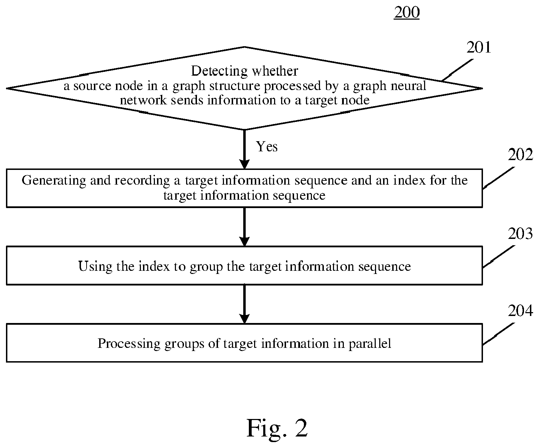

With further reference to Fig. 2, a flow 200 of a method for parallel processing of information according to an embodiment of the present disclosure is illustrated. The method for parallel processing of information includes the following steps.

Step 201, detecting whether a source node in a graph structure processed by a graph neural network sends information to a target node.

In the present embodiment, an executing body of the method for parallel processing of information (for example, the server shown in Fig. 1) may detect whether the source node in the graph structure processed by the graph neural network sends the information to the target node. The graph neural network is a neural network processing graph structures. The graph structure may also be called a graphical structure. In the logical structure of data D = (KR), if the numbers of predecessors and successors of the relationship R relative to a node in K are not limited, that is, only one arbitrary relationship is contained, then this data structure is called a graph structure. A graph may be described by the set of vertices and edges the graph contains. Edges may be directed or undirected, depending on whether there is a direction dependency between the vertices.

Here, the graph structure on which the graph neural network acts may be a directed graph. In the directed graph, if node A is reachable to node B, then node A may be determined as the source node, and node B may be determined as the target node. The graph structure on which the graph neural network acts may also be an undirected graph. In the undirected graph, if node C sends information to node D, then node C that sends the information may be determined as the source node, and node D that receives the information may be determined as the target node.

In the present embodiment, if it is detected that the source node sends the information to the target node in the above graph structure, the executing body may perform step 202.

Step 202, generating and recording, in response to detecting that the source node sends the information to the target node, a target information sequence and an index for the target information sequence.

In the present embodiment, if it is detected in step 201 that the source node sends the information to the target node in the above graph structure, the executing body may generate and record the target information sequence and the index for the target information sequence. Target information in the target information sequence is generally determined based on a characteristic of the source node, a characteristic of the target node, and the sent information. The characteristic of the source node may be a characteristic of an object represented by the source node. The characteristic of the target node may be a characteristic of an object represented by the target node. For example, if the object is a user, the characteristic of the object may include but not limited to at least one of: the user's name, age, gender, residence address, or preference information. If the object is a video, the characteristic of the object may include but not limited to at least one of: video name, video length, video content, information of the uploader of the video, or the number of times the video is clicked.

Here, the executing body may sort the target information corresponding to each piece of information according to a preset node order of each target node receiving the information, generate the target information sequence, and record the generated target information sequence. For example, if source node 1 sends first information to target node B, source node 2 sends second information to target node D, source node 3 sends third information to target node D, source node 4 sends fourth information to target node A, and source node 5 sends fifth information to target node C, and if the preset node order of the target nodes is target node A-target node B-target node C-target node D, and the first information corresponds to first target information, the second information corresponds to second target information, the third information corresponds to third target information, the fourth information corresponds to fourth target information, and the fifth information corresponds to fifth target information, then the generated target information sequence is fourth target information-first target information-fifth target information-third target information-second target information. Here, the first target information is determined based on the characteristic of the source node 1, the characteristic of the target node B and the first information, the second target information is determined based on the characteristic of the source node 2, the characteristic of the target node D and the second information, the third target information is determined based on the characteristic of the source node 3, the characteristic of the target node D and the third information, the fourth target information is determined based on the characteristic of the source node 4, the characteristic of the target node A and the fourth information, and the fifth target information is determined based on the characteristic of the source node 5, the characteristic of the target node C and the fifth information.

It should be noted that, if a target node receives at least two pieces of information, the executing body may randomly sort target information corresponding to the at least two pieces of information, or may sort the target information corresponding to the at least two pieces of information according to a sending order of the information, or may also sort the target information corresponding to the at least two pieces of information according to a receiving order of the information.

In the present embodiment, the executing body may record the index for the generated target information sequence. The index is generally used to group the target information sequence. Target information in the same target information group obtained by grouping generally corresponds to the sent information to the same target node, and information corresponding to the target information in different target information groups is generally the sent information to different target nodes.

For example, the executing body may use loD (Level-of-Detail) Tensor to record the target information sequence, and use loD to record the index for the target information sequence. LoDTensor splices dimensions with inconsistent lengths into a large dimension, and introduces an index data structure (LoD) to record the length of each sequence to divide the tensor into sequences. LoDTensor may greatly reduce the amount of calculation, thereby improving the speed of training.

Step 203, using the index to group the target information sequence.

In the present embodiment, the executing body may use the index to group the target information sequence. If the index is represented in the form of offset, that is, each index is the offset of an index of a division point from the first element (the first division point), then the index generally includes the indexes of the division points (elements). Here, the index of the first element is generally set to 0. For example, if the indexes are 0, 5, 8, and 12, the target information between the division point with index 0 and the division point with index 5 in the above target information sequence may be grouped into one group, the target information between the division point with index 6 and the division point with index 8 in the above target information sequence may be grouped into one group, and the target information between the division point with index 9 and the division point with index 12 in the above target information sequence may be grouped into one group.

Step 204, processing groups of target information in parallel.

In the present embodiment, the executing body may perform parallel processing on the groups of the target information grouped in step 203. Parallel processing is a computing method in a computer system that can perform two or more processes simultaneously. Parallel processing may operate simultaneously on different aspects of the same program. The main purpose of parallel processing is to save solution time for large and complex problems. In order to use parallel processing, it is required to first parallelize the program, that is, distribute the parts of the operation to different processing processes (threads). Here, the executing body may input each group of target information into a preset processing function in parallel to obtain a processing result. The processing function may process different logical operations according to manual settings, for example, perform summing and averaging operations for each group of the target information, or the like.

In some alternative implementations of the present embodiment, the executing body may generate and record, in response to detecting that the source node sends the information to the target node, a target information sequence and an index for the target information sequence according to the following approach: generate, based on lengths of information received by target nodes, indexes for the target information sequence, and record the indexes. In some cases, if the lengths of the pieces of information are the same, the length of the above information may also be referred to as the number of the pieces of information. Specifically, the executing body may determine the lengths of the pieces of information received by the target nodes as indexes for the target information sequence, sort the indexes according to the sorting basis of the target information sequence, and record the sorted indexes. For example, if the length of the information received by target node 1 is 5, the length of the information received by target node 3 is 1, and the length of the information received by target node 2 is 7, and if the target information sequence is sorted according to the node numbers in descending order, then the generated indexes are 1, 7, 5.

In some alternative implementations of the present embodiment, after the parallel processing of groups of target information, the executing body may associate and store, for each group of target information in the groups of the target information, a processing result after parallel processing of the group of target information and a node identifier of a target node corresponding to the group of target information. The executing body may generally store a database for recording the relationship between the processing result of the target information corresponding to each target node and the node identifier of the target node.

In some alternative implementations of the present embodiment, after the inputting, for each piece of information in the pieces of information, the piece of information, a characteristic of a source node from which the piece of information originates, and a characteristic of a target node to which the piece of information is sent, to a preset sending function to obtain target information corresponding to the piece of information, the executing body may associate and store the target information with the node identifier of the corresponding target node. If the target node receives a plurality of pieces of information, it may associate and store the plurality of pieces of target information corresponding to the plurality of pieces of information with the node identifier of the target node. The executing body may generally store a database for recording the relationship between the target information corresponding to the information received by each target node and the node identifier of the target node.

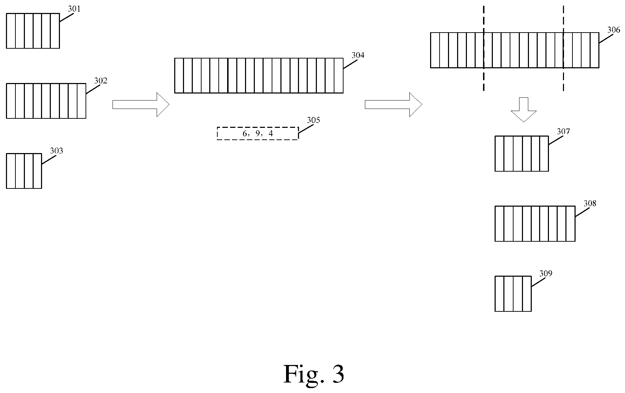

With further reference to Fig. 3, Fig. 3 is a schematic diagram of an application scenario of the method for parallel processing of information according to the present embodiment. In the application scenario of Fig. 3, if the server detects that source node 3 sends first information to target node A, source node 1 sends second information to target node B, and source node 2 sends third information to target node C, then the server may generate first target information 301 corresponding to the first information, generate second target information 302 corresponding to the second information, and generate third target information 303 corresponding to the third information. Then, the server may splice the first target information 301, the second target information 302, and the third target information 303 in the order of target node A-target node B-target node C, thereby generating a target information sequence 304. The server may record the length of the information corresponding to each target node in the order of target node A-target node B-target node C, and determine the lengths (6, 9, 4) of the pieces of target information as indexes 305. Then, the server may use the indexes 305 to group the target information sequence 304, and use the indexes 305 to determine division points (the dotted line positions as shown by an icon 306) for dividing the target information sequence 304. Finally, obtained target information 307, target information 308, and target information 309 may be processed in parallel.

The method for parallel processing of information provided by embodiments of the present disclose records the target information sequence and the index for the target information sequence. In this way, the information in the graph neural network may be processed in parallel, which improves the training speed and prediction speed of the graph neural network. At the same time, the difficulty in writing a graph neural network is greatly reduced through a messaging mechanism.

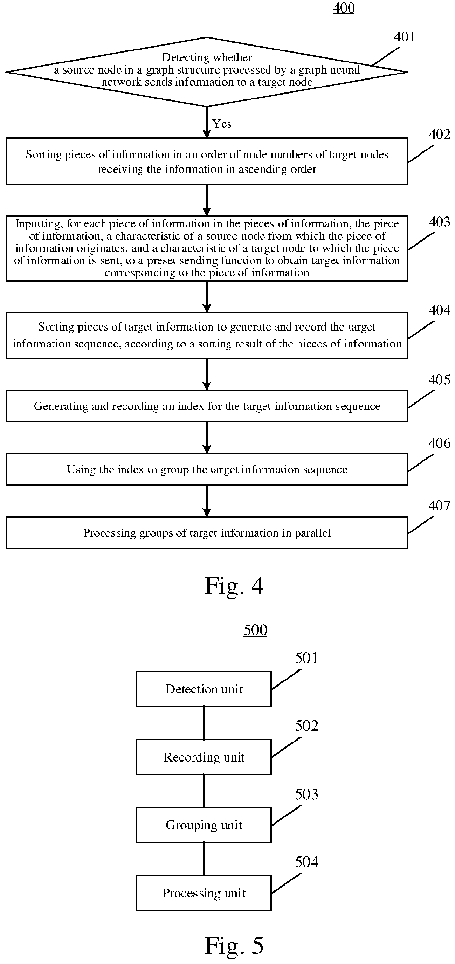

With further reference to Fig. 4, a flow 400 of another embodiment of the method for parallel processing of information is illustrated. The flow 400 of the method for parallel processing of information includes the following steps.

Step 401, detecting whether a source node in a graph structure processed by a graph neural network sends information to a target node.

In the present embodiment, step 401 may be performed in a similar approach to step 201, and detailed description thereof will be omitted.

Step 402, sorting, in response to detecting that the source node sends the information to the target node, pieces of information in an order of node numbers of target nodes receiving the information in ascending order.

In the present embodiment, if it is detected in step 401 that the source node sends the information to the target node, the executing body may sort the pieces of information in the order of the node numbers of the target nodes receiving the information in ascending order. Here, the above node number may be represented in the form of a numerical value. For example, the node number may include 1, 2, 3, 4, 5, or the like.

For example, if the source node 1 sends first information to the target node 2, the source node 2 sends second information to the target node 4, the source node 3 sends third information to the target node 4, the source node 4 sends fourth information to the target node 1, and the source node 5 sends fifth information to the target node 3, the first information corresponds to first target information, the second information corresponds to second target information, the third information corresponds to third target information, the fourth information corresponds to fourth target information, and the fifth information corresponds to fifth target information, then the generated target information sequence is fourth target information-first target information-fifth target information-third target information-second target information.

Step 403, inputting, for each piece of information in the pieces of information, the piece of information, a characteristic of a source node from which the piece of information originates, and a characteristic of a target node to which the piece of information is sent, to a preset sending function to obtain target information corresponding to the piece of information.

In the present embodiment, for each piece of information in the pieces of information, the executing body may input the piece of information, the characteristic of the source node from which the piece of information originates, and the characteristic of the target node to which the piece of information is sent, to the preset sending function to obtain the target information corresponding to the piece of information. The sending function may be set according to actual service logic. For example, if the sending function is used to determine user intimacy between users, and in this case, the source node is used to represent user A and the target node is used to represent user B, then the executing body may input the sent information by the user A to the user B, a user characteristic of the user A and a user characteristic of the user B into a sending function for determining the user intimacy between the users, to obtain the intimacy between the user A and the user B.

Step 404, sorting pieces of target information to generate and record the target information sequence, according to a sorting result of the pieces of information.

In the present embodiment, the executing body may sort the pieces of target information corresponding to the pieces of information to generate and record the target information sequence, according to the sorting result of the pieces of information. For example, if the first information corresponds to the first target information, the second information corresponds to the second target information, the third information corresponds to the third target information, and the fourth information corresponds to the fourth target information, and if the sorting result of the information is: second information-third information-fourth information-first information, then the target information sequence is: second target information-third target information-fourth target information-first target information.

Step 405, generating and recording an index for the target information sequence.

In the present embodiment, the executing body may generate and record the index for the generated target information sequence. The index is generally used to group the target information sequence. Target information in the same target information group obtained by grouping generally corresponds to the sent information to the one target node, and information corresponding to the target information in different target information groups is generally sent to different target nodes.

Here, the executing body may record the length of the information corresponding to each target node in the order of the target nodes, and determine the length of the information as the index.

Step 406, using the index to group the target information sequence.

In the present embodiment, the executing body may use the index to group the target information sequence. If the index is represented in the form of information length, the executing body may divide the target information sequence according to the length of the information. For example, if the indexes are 5, 3, 4, target information of the first five information lengths in the target information sequence may be divided into one group, target information of the middle three information lengths may be divided into one group, and target information of the last four information lengths may be divided into one group.

Step 407, processing groups of target information in parallel.

In the present embodiment, step 407 may be performed in a similar approach to step 204, and detailed description thereof will be omitted.

As can be seen from Fig. 4, compared with the embodiment corresponding to Fig. 2, the flow 400 of the method for parallel processing of information in the present embodiment embodies the step of generating target information and sorting the target information. Therefore, the solution described in the present embodiment provides a sorting method for the target information.

With further reference to Fig. 5, as an implementation of the method shown in the above figures, an embodiment of the present disclosure provides an apparatus for parallel processing of information, and the apparatus embodiment corresponds to the method embodiment as shown in Fig. 2. The apparatus may be specifically applied to various electronic devices.

As shown in Fig. 5, an apparatus 500 for parallel processing of information of the present embodiment includes: a detection unit 501, a recording unit 502, a grouping unit 503, and a processing unit 504. The detection unit 501 is configured to detect whether a source node in a graph structure processed by a graph neural network sends information to a target node. The recording unit 502 is configured to generate and record, in response to detecting that the source node sends the information to the target node, a target information sequence and an index for the target information sequence, target information being determined based on a characteristic of the source node, a characteristic of the target node, and the sent information, and the index being used to group the target information sequence. The grouping unit 503 is configured to use the index to group the target information sequence. The processing unit 504 is configured to process groups of target information in parallel.

In the present embodiment, for specific processing of the detection unit 501, the recording unit 502, the grouping unit 503, and the processing unit 504 in the apparatus 500 for parallel processing of information, reference may be made to step 201, step 202, step 203 and step 204 in the embodiment corresponding to Fig. 2.

In some alternative implementations of the present embodiment, the recording unit 502 may be further configured to generate and record, in response to detecting that the source node sends the information to the target node, the target information sequence and the index for the target information sequence through the following approaches: in response to detecting that the source node sends the information to the target node, the recording unit 502 may sort pieces of information in an order of node numbers of target nodes receiving the information in ascending order. Here, the node number is represented in the form of numerical value. Then, for each piece of information in the pieces of information, the recording unit 502 may input the piece of information, a characteristic of a source node from which the piece of information originates, and a characteristic of a target node to which the piece of information is sent, to a preset sending function to obtain target information corresponding to the piece of information. The sending function may be set according to actual service logic. After that, the recording unit 502 may sort pieces of target information corresponding to the pieces of information to generate and record the target information sequence, according to a sorting result of the pieces of information.

In some alternative implementations of the present embodiment, the recording unit 502 may be further configured to generate and record, in response to detecting that the source node sends the information to the target node, the target information sequence and the index for the target information sequence through the following approach: the recording unit 502 may generate, based on lengths of information received by target nodes received the information, indexes for the target information sequence, and record the indexes. In some cases, if the lengths of the pieces of information are the same, the length of the above information may also be referred to as the number of the pieces of information. Specifically, the recording unit 502 may determine the lengths of the pieces of information received by the target nodes as indexes for the target information sequence, sort the indexes according to the sorting basis of the target information sequence, and record the sorted indexes.

In some alternative implementations of the present embodiment, the apparatus 500 for parallel processing of information may further include a first storing unit (not shown in the figure). The first storing unit may be configured to associate and store, for each group of target information in the groups of the target information, a processing result after parallel processing of the group of target information and a node identifier of a target node corresponding to the group of target information. The first storing unit may generally store a database for recording the relationship between the processing result of the target information corresponding to each target node and the node identifier of the target node.

In some alternative implementations of the present embodiment, the apparatus 500 for parallel processing of information may further include a second storing unit (not shown in the figure).The second storing unit may be configured to associate and store the target information with the node identifier of the corresponding target node. If the target node receives a plurality of pieces of information, it may associate and store target information corresponding to the plurality of pieces of information with the node identifier of the target node. The second storing unit may generally store a database for recording the relationship between the target information corresponding to the information received by each target node and the node identifier of the target node.

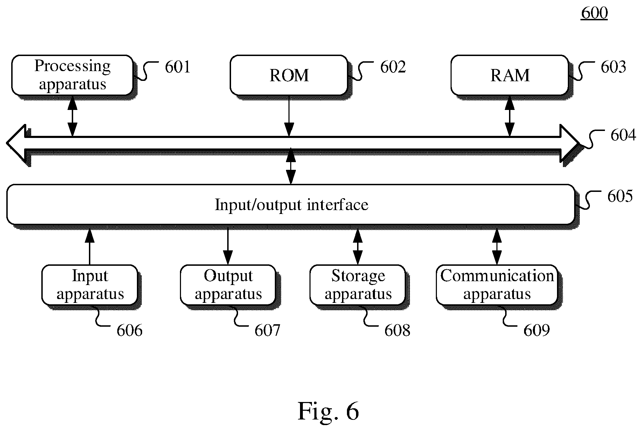

With further reference to Fig. 6, a schematic structural diagram of an electronic device (for example, the server in Fig. 1) 600 adapted to implement embodiments of the present disclosure is illustrated. The server shown in Fig. 6 is merely an example and should not impose any limitation on the function and scope of use of embodiments of the present disclosure.

As shown in Fig. 6, the electronic device 600 may include a processing apparatus (for example, a central processor, a graphics processor, etc.) 601, which may execute various appropriate actions and processes in accordance with a program stored in a read-only memory (ROM) 602 or a program loaded into a random access memory (RAM) 603 from a storage apparatus 608. The RAM 603 also stores various programs and data required by operations of the electronic device 600. The processing apparatus 601, the ROM 602 and the RAM 603 are connected to each other through a bus 604. An input/output (I/O) interface 605 is also connected to the bus 604.

Generally, the following apparatuses may be connected to the I/O interface 605: an input apparatus 606, including such as a touch screen, a touch pad, a keyboard, a mouse, a camera, a microphone, an accelerometer, or a gyroscope; an output apparatus 607 including such as a liquid crystal display (LCD), a speaker, or a vibrator; the storage apparatus 608 including such as a magnetic tape, or a hard disk; and a communication apparatus 609. The communication apparatus 609 may allow the electronic device 600 to perform wireless or wired communication with other devices to exchange data. Although Fig. 6 shows the electronic device 600 having various apparatuses, it should be understood that it is not required to implement or have all the apparatuses shown. More or fewer apparatuses may be implemented or provided instead. Each block shown in Fig. 7 may represent one apparatus, and may also represent a plurality of apparatuses as required.

In particular, according to embodiments of the present disclosure, the process described above with reference to the flow chart may be implemented in a computer software program. For example, an embodiment of the present disclosure includes a computer program product, which includes a computer program that is tangibly embedded in a computer-readable medium. The computer program includes program codes for performing the method as illustrated in the flow chart. In such an embodiment, the computer program may be downloaded and installed from a network via the communication apparatus 609, or may be installed from the storage apparatus 608, or installed from the ROM 602. The computer program, when executed by the processing apparatus 601, implements the above mentioned functionalities as defined in the method of embodiments of the present disclosure. It should be noted that the computer readable medium according to some embodiments of the present disclosure may be a computer readable signal medium or a computer readable medium or any combination of the above two. An example of the computer readable medium may include, but is not limited to: electric, magnetic, optical, electromagnetic, infrared, or semiconductor systems, apparatuses, elements, or a combination of any of the above. A more specific example of the computer readable medium may include, but is not limited to: electrical connection with one or more pieces of wire, a portable computer disk, a hard disk, a random access memory (RAM), a read only memory (ROM), an erasable programmable read only memory (EPROM or flash memory), an optical fiber, a portable compact disk read only memory (CD-ROM), an optical memory, a magnetic memory, or any suitable combination of the above. In some embodiments of the present disclosure, the computer readable medium may be any tangible medium containing or storing programs, which may be used by, or used in combination with, a command execution system, apparatus or element. In some embodiments of the present disclosure, the computer readable signal medium may include a data signal in the base band or propagating as a part of a carrier wave, in which computer readable program codes are carried. The propagating data signal may take various forms, including but not limited to an electromagnetic signal, an optical signal, or any suitable combination of the above. The computer readable signal medium may also be any computer readable medium except for the computer readable medium. The computer readable medium is capable of transmitting, propagating or transferring programs for use by, or used in combination with, a command execution system, apparatus or element. The program codes contained on the computer readable medium may be transmitted with any suitable medium, including but not limited to: wireless, wired, optical cable, RF medium, etc., or any suitable combination of the above.

The computer readable medium may be included in the electronic device, or a stand-alone computer readable medium not assembled into the electronic device. The computer readable medium carries one or more programs. The one or more programs, when executed by the electronic device, cause the electronic device to: detect whether a source node in a graph structure processed by a graph neural network sends information to a target node; generate and record, in response to detecting that the source node sends the information to the target node, a target information sequence and an index for the target information sequence, target information being determined based on a characteristic of the source node, a characteristic of the target node, and the sent information, and the index being used to group the target information sequence; use the index to group the target information sequence; and process groups of target information in parallel.

A computer program code for executing operations in some embodiments of the present disclosure may be compiled using one or more programming languages or combinations thereof. The programming languages include object-oriented programming languages, such as Java, Smalltalk or C++, and also include conventional procedural programming languages, such as "C" language or similar programming languages. The program code may be completely executed on a user's computer, partially executed on a user's computer, executed as a separate software package, partially executed on a user's computer and partially executed on a remote computer, or completely executed on a remote computer or server. In a circumstance involving a remote computer, the remote computer may be connected to a user's computer through any network, including local area network (LAN) or wide area network (WAN), or be connected to an external computer (for example, connected through the Internet using an Internet service provider).

The flow charts and block diagrams in the accompanying drawings illustrate architectures, functions and operations that may be implemented according to the systems, methods and computer program products of the various embodiments of the present disclosure. In this regard, each of the blocks in the flow charts or block diagrams may represent a module, a program segment, or a code portion, said module, program segment, or code portion including one or more executable instructions for implementing specified logical functions. It should be further noted that, in some alternative implementations, the functions denoted by the blocks may also occur in a sequence different from the sequences shown in the figures. For example, any two blocks presented in succession may be executed substantially in parallel, or they may sometimes be executed in a reverse sequence, depending on the functions involved. It should be further noted that each block in the block diagrams and/or flow charts as well as a combination of blocks in the block diagrams and/or flow charts may be implemented using a dedicated hardware-based system executing specified functions or operations, or by a combination of dedicated hardware and computer instructions.

The units involved in embodiments of the present disclosure may be implemented by means of software or hardware. The described units may also be provided in a processor, for example, may be described as: a processor including a detection unit, a recording unit, a grouping unit, and a processing unit. Here, the names of these units do not in some cases constitute limitations to such units themselves. For example, the processing unit may also be described as "a unit configured to process groups of target information in parallel".

The above description only provides an explanation of embodiments of the present disclosure and the technical principles used. It should be appreciated by those skilled in the art that the inventive scope of the present disclosure is not limited to the technical solutions formed by the particular combinations of the above-described technical features. The inventive scope should also cover other technical solutions formed by any combinations of the above-described technical features or equivalent features thereof without departing from the concept of the present disclosure. Technical schemes formed by the above-described features being interchanged with, but not limited to, technical features with similar functions disclosed in the present disclosure are examples.

## Claims

1. A method for parallel processing of information, comprising:
detecting (201) whether a source node in a graph structure processed by a graph neural network sends information to a target node; (201)
generating and recording (202), in response to detecting that the source node sends the information to the target node, a target information sequence and an index for the target information sequence, target information being determined based on a characteristic of the source node, a characteristic of the target node, and the sent information, and the index being used to group the target information sequence;
using (203) the index to group the target information sequence; and
processing (204) groups of target information in parallel.

2. The method according to claim 1, wherein the generating and recording (202), in response to detecting that the source node sends the information to the target node, the target information sequence and the index for the target information sequence, comprises:
sorting, in response to detecting that the source node sends the information to the target node, pieces of information in an order of node numbers of target nodes receiving the information in ascending order, wherein the node number is represented in a form of numerical value;
inputting, for each piece of information in the pieces of information, the piece of information, a characteristic of a source node from which the piece of information originates, and a characteristic of a target node to which the piece of information is sent, to a preset sending function to obtain target information corresponding to the piece of information; and
sorting pieces of target information to generate and record the target information sequence, according to a sorting result of the pieces of information.

3. The method according to claim 1 or 2, wherein the generating and recording (202), in response to detecting that the source node sends the information to the target node, the target information sequence and the index for the target information sequence, comprises:
generating, based on lengths of information received by target nodes, indexes for the target information sequence, and recording the indexes.

4. The method according to any one of claims 1-3, wherein, after the processing (204) groups of target information in parallel, the method further comprises:
associating and storing, for each group of target information in the groups of the target information, a processing result after parallel processing of the group of target information and a node identifier of a target node corresponding to the group of target information.

5. The method according to any one of claims 2-4, wherein, after the inputting, for each piece of information in the pieces of information, the piece of information, the characteristic of the source node from which the piece of information originates, and the characteristic of the target node to which the piece of information is sent, to the preset sending function to obtain target information corresponding to the piece of information, the method further comprises:
associating and storing the target information with a node identifier of a corresponding target node.

6. An apparatus for parallel processing of information, comprising:
a detection unit (501), configured to detect whether a source node in a graph structure processed by a graph neural network sends information to a target node;
a recording unit (502), configured to generate and record, in response to detecting that the source node sends the information to the target node, a target information sequence and an index for the target information sequence, target information being determined based on a characteristic of the source node, a characteristic of the target node, and the sent information, and the index being used to group the target information sequence;
a grouping unit (503), configured to use the index to group the target information sequence; and
a processing unit (504), configured to process groups of target information in parallel.

7. The apparatus according to claim 6, wherein the recording unit (502) is further configured to generate and record, in response to detecting that the source node sends the information to the target node, the target information sequence and the index for the target information sequence by:
sorting, in response to detecting that the source node sends the information to the target node, pieces of information in an order of node numbers of target nodes receiving the information in ascending order, wherein the node number is represented in a form of numerical value;
inputting, for each piece of information in the pieces of information, the piece of information, a characteristic of a source node from which the piece of information originates, and a characteristic of a target node to which the piece of information is sent, to a preset sending function to obtain target information corresponding to the piece of information; and
sorting pieces of target information to generate and record the target information sequence, according to a sorting result of the pieces of information.

8. The apparatus according to claim 6 or 7, wherein the recording unit (502) is further configured to generate and record, in response to detecting that the source node sends the information to the target node, the target information sequence and the index for the target information sequence by:
generating, based on lengths of information received by target nodes, indexes for the target information sequence, and recording the indexes.

9. The apparatus according to any one of claims 6-8, wherein the apparatus further comprises:
a first storing unit, configured to associate and store, for each group of target information in the groups of the target information, a processing result after parallel processing of the group of target information and a node identifier of a target node corresponding to the group of target information.

10. The apparatus according to any one of claims 6-9, wherein, the apparatus further comprises:
a second storing unit, configured to associate and store the target information with a node identifier of a corresponding target node.

11. An electronic device, comprising:
one or more processors (601); and
a storage apparatus (602, 603), storing one or more programs thereon,
the one or more programs, when executed by the one or more processors (601), cause the one or more processors (601) to implement the method according to any one of claims 1-5.

12. A computer readable medium, storing a computer program thereon, the program, when executed by a processor (601), implements the method according to any one of claims 1-5.
